# EUROPEAN PATENT SPECIFICATION

(11) **EP 4 281 861 B1**
(45) Date of publication and mention of the grant of the patent: **04.06.2025**
(21) Application number: 21702403.3
(22) Date of filing: 21.01.2021
(51) Int. Cl.: G06F 9/445, B60R 16/023

(54) **METHOD FOR SETTING SPECIFICATION DATA OF VEHICLE SPECIFICATIONS IN SEVERAL CONTROL UNITS OF A VEHICLE AND CONTROL UNIT FOR A VEHICLE AND VEHICLE**
VERFAHREN ZUM FESTLEGEN VON VORGABEDATEN VON FAHRZEUGSPEZIFIKATIONEN IN MEHREREN STEUEREINHEITEN EINES FAHRZEUGS UND STEUEREINHEIT FÜR EIN FAHRZEUG SOWIE FAHRZEUG
PROCÉDÉ DE RÉGLAGE DE DONNÉES DE SPÉCIFICATION DE SPÉCIFICATIONS DE VÉHICULE DANS PLUSIEURS UNITÉS DE COMMANDE D'UN VÉHICULE ET UNITÉ DE COMMANDE POUR UN VÉHICULE ET VÉHICULE

(43) Date of publication of application: 29.11.2023
(73) Proprietor: Audi AG, 85045 Ingolstadt (DE); CARIAD SE, 38440 Wolfsburg (DE)
(72) Inventor: KIRSCHNER, Dominik, 85049 Ingolstadt (DE); SCHLEGEL, Christian, 10115 Berlin (DE)
(74) Representative: Hofstetter, Schurack & Partner
(86) International application number: PCT/EP2021/051335
(87) International publication number: WO 2022/156895

(56) References cited:
- WO-A1-2010/083090
- WO-A1-2014/193347
- US-A1- 2002 116 093

## Description

The invention is concerned with a method for setting specification data in several control units of a vehicle. The specification data describe vehicle specifications of the vehicle such that at least one functionality of the control unit may be adapted to the vehicle. The invention also provides a control unit for a vehicle and a vehicle that comprises several control units.

When a vehicle control unit provides a vehicle functionality in a specific vehicle, vehicle specifications or characteristic values of that vehicle need to be considered, for example, a size of the vehicle (length and/or width) and/or a characteristic driving speed and/or a mounting position of a front camera and/or a wheel distance, just to name a few examples. If a control unit is to be integrated in a vehicle, a dataset comprising these characteristic data needs to be set or stored in the control unit in order to adapt the at least one functionality that it provides. A vehicle functionality can be a driver assistance system or a parking assistance system, just to name examples. The necessary data set is named specification data in the sequel. Only after setting these specification data, the control unit is able to provide a correct functionality in the specific vehicle in which the control unit is to be operated.

When a new vehicle is to be assembled, each control unit therefore needs to be adapted or configured for that vehicle by storing the respective dataset of specification data in that control unit. Regarding the whole vehicle, the same specification data are stored several times in the different control units. Coordinating this process in order to ensure that all control units use the same currently valid specification data can be error prone. Additionally, the configuration of the vehicle may alter during its lifetime, for example, when a new camera is installed. Then, all affected control units that provide functionality that could use that new camera need to be updated by storing new, updated specification data in the respective control unit. This increases the complexity of integrating new equipment into a vehicle.

Document DE 10 2017 222 179 A1 describes a vehicle with a central control unit that may receive error data from other control units and may store the error data in an error data storage. Display control units may retrieve these error data from the error data storage to present error messages to a user of the vehicle. As the different control units may use different data formats, a data adapter needs to be provided in the error data storage.

Document DE 601 12 224 T2 describes a server computer that may be accessed by mobile phones that are used in a vehicle. The server computer is integrated in the vehicle and stores media data, for example, email data or games. It is not possible to provide information to electronic control units of the vehicle in order to configure their vehicle functionalities.

Document WO 2018/192853 A1 describes a vehicle with a control module that receives input signals from electronic control units and provides these input signals at an interface where other electronic control units may retrieve the signals by identifying the requested signal on the basis of signal identification numbers. The control module therefore links a plurality of control units for exchanging signals. The signals may be stored in the control module such that the delivery of the signals is also possible at a later time, i.e. a delayed communication between control units is made possible.

Document WO 2010 / 083 090 A1 discloses a method for setting parameters in several control units of a vehicle.

It is an object of the present invention to provide information about a currently valid specification of a vehicle in several different control units.

The object is accomplished by the subject matter of the independent claims. Advantageous developments with convenient and non-trivial further embodiments of the invention are specified in the following description, the dependent claims and the figures.

The invention provides a method for storing or setting specification data of vehicle specifications in several different control units of a vehicle. The control units provide at least one respective vehicle functionality and each of the control units configures its respective part of the least one vehicle functionality on the basis of the vehicle specifications. For example, if a control unit provides a parking assistance system as vehicle functionality, that control unit may configure the parking assistance system on the basis of specification data regarding the cameras that are available in the vehicle. For example, the number and/or position of at least one camera of the vehicle may be described by the specification data and the control unit may adapt the parking assistance system based on these information from the specification data. In general, the vehicle specifications may describe geometrical dimensions and/or the available equipment and/or codes and/or IDs that may each characterize the type and/or built version of the vehicle. In particular, specification data are permanent or constant throughout a driving phase of the vehicle, i.e. the specification data are no driving state data that may describe the current operating state of the vehicle, for example no data about a current driving speed or an engine temperature.

For proving the currently valid information regarding the specifications of the vehicle, a common data storage is provided in the vehicle where the specification data are stored, i.e. the common data storage provides those specification data that describe the currently valid vehicle specification information or vehicle characteristics. For distributing these specification information, the control units are once or repeatedly operated in an initialization phase. In its initialization phase the respective control unit receives a copy of the specification data (or a subset thereof) out of the common data storage and configures or adapts or parameterizes its respective part of the at least one vehicle functionality according to the received specification data. In other words, there is preferably only one valid set of the specification data provided in the common data storage. For initializing each of the control units, i.e. for setting up or configuring their at least one vehicle functionality, they are provided with the specification data from that common data storage. In particular, at least two or more than two control units receive identical copies of the set or a subset of specification data from the common data storage, i.e. they share these specification data. The initialization phase may be entered or performed once in a lifetime of the vehicle, i.e. after the vehicle has been built and is operated for the first time. Alternatively, the initialization phase may be entered, for example, after a workshop has altered the vehicle (where an operator may initiate the initialization phase) and/or after each start-up or begin of operation of the vehicle after a parking phase, when the engine of the vehicle and/or the ignition of the vehicle has been turned off. The initialization phase may alternatively or additionally be entered after reconnecting a battery or an electric energy storage to the electric network of the vehicle that supplies the electronic control units with electric energy. Thus, when a control unit is operated for the first time or after each parking phase or after connecting it to an electric energy source, i.e. when a control unit has been switched off or has been disconnected from an energy supply, and when the control unit is waking up from a stand-by or is starting, it may request or receive its part of the specification data from the common data storage such that its at least one vehicle functionality may adapt or initialize or configure itself.

The invention provides the advantage that all of the control units are provided with the same common specification data such that they are configured on an identical data basis. Additionally, the vehicle specifications of the vehicle only need to be written once into the common data storage by storing the specification data in that common data storage and all the control units are coordinated or synchronized in that they base their adaptation or configuration of their at least one functionality on these same specification information. This provides the advantage that updating errors are prevented and time for setting the specification data in the vehicle is saved.

It is to be noted that a control unit may provide one or more respective vehicle functionalities and/or several control units may support or provide one vehicle functionality together, in the sense that each of these control units provides a part of that vehicle functionality. For example, one control unit may process sensor data of a sensor whereas another control unit may detect at least one object on the basis of these processed sensor data.

According to the invention the common data storage is coupled to a communication interface for updating the specification data in the common data storage, wherein the communication interface is coupled to a wireless communication unit of the vehicle and/or to a network connector that is designed to receive updated specification data from outside the vehicle. An example for a wireless communication unit is a WiFi-unit or a cellular communication unit, for example, 5G or LTE or UMTS, or a Bluetooth unit. A network connector can be based on an ethernet network standard or a USB connector. After providing new, updated specification data in the common data storage, these updated specification data are distributed among the control units in the next initialization phase. Thus, only the data in the common data storage need to be updated from outside the vehicle and then the vehicle will distribute the updated specification data starting from the common data storage.

The invention also comprises embodiments that provide features which afford additional technical advantages.

According to one embodiment the control units are connected to a communication network and likewise the common data storage is provided in a processing unit that is also connected to the communication network. For transferring the specification data from the common data storage to the control units a request service or base service is provided by the processing unit that provides the common data storage. The processing unit can be provided, e.g., by one of the control units or, e.g., it can be provided a further control unit. The common data storage can be based on, e.g., a flash drive or a hard drive or a EPROM (Electrically Programmable Read-Only Memory). The base service can be designed as an IPC function (IPC - Inter Process Communication), e.g. a so called IP-socket (IP - internet protocol), and/or it can be based on a bus controller. The base service can be, for example, a software function that may be called by the respective control unit for requesting the specification data or a subset of the specification data. Providing the common data storage in a processing unit that is connected to a communication network provides the advantage that for transferring the specification data the communication network may be used. The communication network can be, for example, a communication bus, e.g. a CAN-bus (CAN - Controller Area Network), or an ethernet network.

According to one embodiment the base service receives request messages from the control units and selects the set of or a subset of the specification data according the respective request message and sends the selected specification data to the control unit that sent the respective request message. In other words, each control unit only receives that part of the specification data that is actually needed or requested. This saves an unnecessary transfer of un-needed specification data to the control units and thus saves network bandwidth.

According to one embodiment the base service broadcasts the specification data in the communication network in at least one broadcast message while several or all of the control units are in the initialization phase. The data of each broadcast message are read by more than one control unit such that the specification data contained in the broadcast message are used in these several control units. Therefore, more than one control unit is addressed by a single broadcast message. In an ethernet network, such a broadcast message can be generated by using the so-called broadcast-address. In a communication bus, a broadcast message can be generated by programming more than one control unit in such a way that they all read out the data transferred in the same common time slot.

According to one embodiment the initialization phase is triggered on and/or by a start-up of the vehicle and the base service is (only) provided at or after the start-up until a pre-defined interruption criterion is fulfilled. After the interruption criterion is fulfilled, the base service is stopped or interrupted for the remainder of a current driving phase. The specification data are preferably transferred during the initialization phase only. The start-up of the vehicle can be the event when the engine of the vehicle is turned on or energized or when an electric network for supplying the control units is energized by closing a switch in an electric battery of the vehicle. A start-up of the vehicle can be signaled by the so-called ignition signal which, in a vehicle with a combustion engine, is the signal that indicates that the ignition of the vehicle is supplied with electric voltage. In general, the start-up of the vehicle is the beginning of a driving phase, when the vehicle is to be driven based on its engine power. The driving phase lasts from the start to the next parking phase, when the vehicle engine is turned off for parking. In contrast to this, a start-stop-mechanism does not turn off the engine for parking, but only temporarily such that it can be turned on again by operating a vehicle pedal. At start-up after a parking phase, a control unit wakes up from a stand-by mode or from a turned-off state. During such a boot-up or after such a boot-up of the software of the control unit, the initialization phase can be started. Later, the initialization phase is stopped, i.e. no further specification data are received or requested from the common data storage, when the interruption criterion is fulfilled. Such an interruption criterion can be, for example, that a specific time duration since the beginning of the initialization phase or the start-up has ended. Possible values for the time duration can be in a range from one second to five minutes. Thus, within these first seconds or minutes of a driving phase, the control units receive or obtain the specification data from the common data storage.

Alternatively or additionally, the interruption criterion for ending the base service can be designed as follows: The control units can be registered in the processing unit that operates the common data storage. Whenever one of the control units demands or requests the specification data or a subset of the specification data, this is counted or determined as a request event such that it is known in the processing unit which control unit or how many control units have requested their specification data so far. Once the last registered control unit has demanded or received its specification data, this may fulfill the interruption criterion. Thus, the common data storage or the base service only needs to be available for the minimum amount of time until each of the control units is supplied with the necessary specification data.

According to one embodiment, when the vehicle is started, i.e. at start-up, a timer is started and only at the end of the timer, the initialization phase is triggered. In other words, the initialization phase does not start immediately after the vehicle is started, for example, after an ignition signal wakes up or boots up the control units. Instead, a specific delay, as defined by the timer, is introduced such that the specification data are transferred to the control unit only after, for example, other initial data traffic is finished. Such initial data traffic might be necessary to start or initialize predefined basic functions of the vehicle. It will not be interrupted by the transfer of specification data.

According to one embodiment at least one of the control units comprises an operating system, OS, and the at least one respective functionality of the control unit is implemented as at least one user space software or application software, App, that is run by the operating system. At least a part or subset of the specification data are retrieved from the common data storage by the operating system and the retrieved specification data are kept in a local data storage of the control unit and the operating system provides at least a part of the locally stored specification data to the at least one application software. In other words, for an application software that provides a specific vehicle functionality, the necessary specification data are provided by the operating system of the control unit that is running the application software. This provides the advantage that for several different applications, only one request of the operating system is necessary and the received specification data may then be distributed inside the control unit by the operating system such that each application software is supplied with the necessary specification data.

According to one embodiment the operating system receives requirement data from the at least one application software of the control unit and the operating system then retrieves only a subset of the specification data from the common data storage, where the retrieved subset is determined by the requirement data. This provides the advantage that the operating system only requests those specification data that are actually required in the control unit by the application software (as is determined by the requirement data).

According to one embodiment at least one of the control units keeps the received specification data in the local data storage or generally in a non-volatile local data storage while the control unit is switched off and, while in the next initialization phase the control unit is waiting for the specification data from the common data storage and/or if the common data storage is un-reachable for the control unit, the control unit provides the locally stored specification data from the local data storage to the vehicle functionality, e.g. to the corresponding application software. This prevents a blocking of the vehicle functionality due to lack of the necessary specification data. If new or current specification data are not arriving from the common data storage, the fallback is the copy of the specification data as stored in the local non-volatile data storage from the previous driving phase or the previous initialization phase.

As was already mentioned, according to one embodiment the specification data describe static vehicle specifications that do not changed during a driving phase of the vehicle. In other words, it is not necessary to update the specification data while the vehicle is in operation or while the vehicle is driving.

According to one embodiment the vehicle specifications describe at least one of the following: a geometry of the vehicle that is to be considered by the respective vehicle functionality of at least one control unit; an equipment that is available in the vehicle for a use by the respective functionality of at least one control unit; a mounting position of a specific equipment; available callable functions of a specific equipment; trim level identifier; coding values for specific available functions. It has proven that these specifications are suitable for distributing them among the control units on the basis of a common data storage.

According to one embodiment at least one vehicle functionality provides a driver assistance system and/or a parking assistance system. It has proven beneficial to adapt these vehicle functionalities on the basis of specification data that are stored in a central or common data storage as these functionalities may be distributed over more than one control unit and therefore need to be coordinated or synchronized in the sense that they must be configured and/or operated on the basis of common or identical specification data.

According to one embodiment at least one vehicle functionality comprises that the control unit determines on the basis of the specification data, if a camera is available and where the respective available camera is positioned, and, if an activation of a reverse gear is detected, a reverse driving assistance is provided for a driver of the vehicle by the control unit, wherein the reverse driving assistance provides camera image data to the driver, if a camera is available that provides a pre-defined rear view. Thus, depending on the presence of a rear view camera and/or depending on the mount position of that rear view camera, the vehicle functionality is adapted or configured.

According to one embodiment at least one of the control units is designed for a use in several different vehicle types and the respective control unit adapts to the vehicle on the basis of the specification data after the control unit has been built into that vehicle. This makes is possible to provide a single type of control unit with a generic software. Depending on the vehicle type that the control unit is built into, the control unit can self-adapt or self-configure on the basis of the specification data. For example, if two different vehicle types comprise two different vehicle length values and/or different characteristic values, the same type of control unit can be used for both vehicle types as the control unit will adapt its vehicle functionality to the specific vehicle length or in general to the characteristic value of that vehicle type.

The invention is also concerned with a vehicle comprising control units. The control units are designed to provide at least vehicle functionality and each of the control units is designed to configure its respective vehicle functionality or its respective part of a vehicle functionality on the basis of the vehicle specifications, wherein in the vehicle a common data storage is provided where specification data describing the currently valid vehicle specifications are stored and the control units are designed to repeatedly operate in an initialization phase where the control units receive a copy of the specification data or of a subset of the specification data out of the common data storage and adapt their respective part of the at least one vehicle functionality according to the received specification data. The inventive vehicle is preferably designed as a motor vehicle, in particular as a passenger vehicle or a truck, or as a bus or a motorcycle.

The invention is also concerned with a control unit for a vehicle. The control unit is designed to provide at least one vehicle functionality and/or a part of at least one vehicle functionality in the vehicle and to receive specification data from a common data storage of the vehicle and to adapt at least one vehicle functionality according to the received specification data. In other words, this control unit can be used to self-adapt or self-configure by adapting its vehicle functionality, for example a parking assistance or driver assistance, based on specification data that it receives from a common data storage of the vehicle.

The invention is also concerned with a control unit that comprises a common data storage for several other control units and the control unit is designed to store specification data in the common data storage and to send out at least a subset of the specification data to a respective one of the other control units. In other words, this control unit can be used to provide the common data storage and to send out or distribute specification data of the vehicle to other control units. The control unit can provide a network adapter for connecting the control unit to a communication network of the vehicle, for example, a communication bus or an ethernet network. In other words, the control unit may be operated as the described processing unit.

The invention also comprises the combinations of the features of the different embodiments.

In the following exemplary implementations of the invention are described. The figures show:
- Fig. 1: a schematic illustration of an embodiment of the inventive vehicle; and
- Fig. 2: a schematic illustration of embodiments of the inventive electronic control unit as it may be provided in the vehicle shown in Fig. 1.

The implementations explained in the following are a preferred embodiments of the invention. However, in the embodiments, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

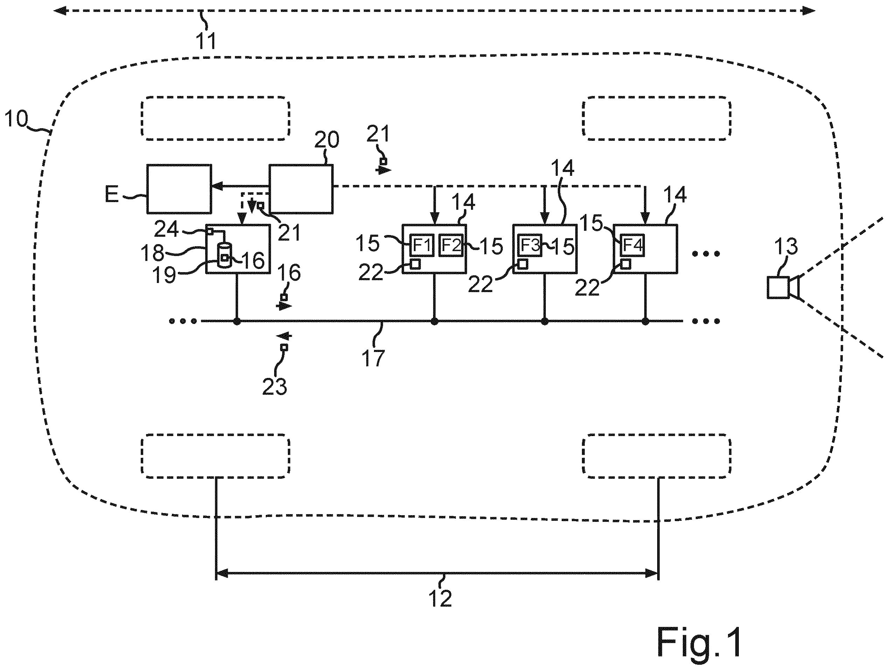

Fig. 1 shows a vehicle 10 that can be motor vehicle, especially a passenger vehicle or a bus or a truck. The vehicle 10 can be of a specific vehicle type with one or more than one characteristic or specific value, for example, a specific vehicle length 11 and/or a specific wheel distance 12 and/or a specific available equipment 13, for example, a rear view camera, with a specific mounting position.

In the vehicle 10, several control units 14 may provide vehicle functionalities 15, that are named here as F1, F2, F3, F4. Examples for such vehicle functionalities 15 are a parking assistance, a driver assistance, a media playback. For performing the respective functionality 15 correctly, the corresponding control unit 14 may configure or adapt the functionality 15 according to the characteristics or specifications of the vehicle 10, for example, the length 11, the wheel distance 12 and/or the available equipment 13. In vehicle 10, the control units 14 do not need to be prepared or be pre-programmed when they are implemented or installed into the vehicle 10. Instead, after installing the control units 14 in the vehicle 10, the control units 14 may receive specification data 16 describing the currently valid specifications of the vehicle 10 and they may configure or adapt one or more than one functionality 15 accordingly.

The control units 14 may be connected to a data network or communication network 17, for example, a communication bus or an ethernet network. An additional control unit 18 may provide the specification data 16 from a common data storage 19 where the specification data 16 of the vehicle 10 may be stored in a centralized way for all the control units 14. When vehicle 10 is started, this may be signaled to the control units 14, 18 by an electronic circuit 20 that may generate an ignition signal 21 for waking up or booting up the control units 14, 18. The ignition signal may be part of a starting process of an engine E of the vehicle 10, for example, a combustion engine and/or an electric engine. Depending on the signal for the start-up of vehicle 10, control units 14 may enter an initialization phase 22 that may last, for example, one second to five minutes. During the initialization phase 22, the control units 14 may request a respective set or subset of the specification data 16 by generating a respective request message 23 that may be sent by the respective control unit 14 to the control unit 18.

The start-up of vehicle 10 may initialize or begin a driving phase, that may end or may be followed a parking phase when engine E is turned off again and no start-stop-mechanism is active. The driving phase therefore lasts until the next parking phase.

Thus, at the beginning of each driving phase, the control units 14 can be provided with the currently valid specification data 16 from the common data storage 19. The common data storage 19 may be connected to an interface 24 for receiving updated specification data from a data source that is external to vehicle 10, for example, from a server of the internet and/or from a computer in a workshop where vehicle 10 may have been modified, for example, by adding additional equipment 13. The interface 24 may be connected to the network 17 or it may be separate from the network 17.

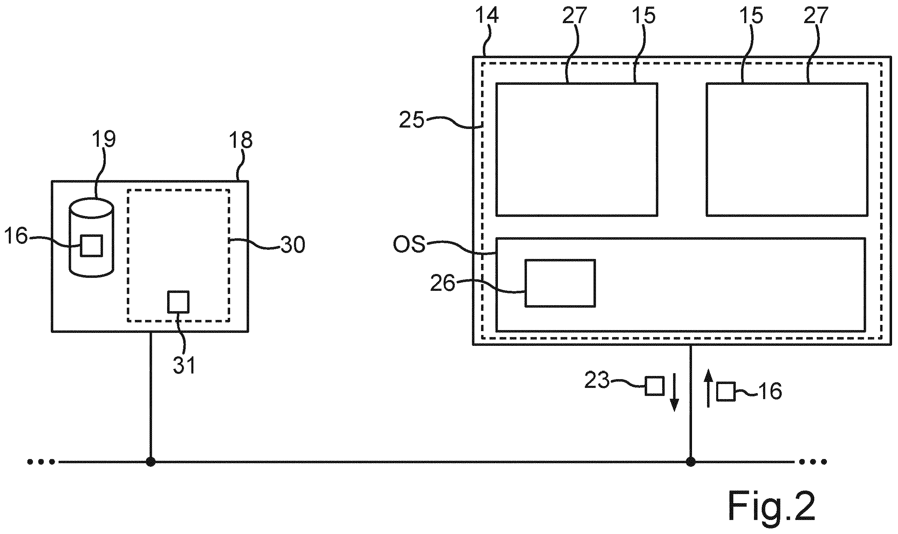

Fig. 2 shows one of the control units 14 and the control unit 18 in more detail. The control unit 14 may comprise a processing unit 25 that may be based on one or more microprocessors and/or one or more microcontrollers. For example, the processing unit 25 may comprise an SOC (System on Chip). The control unit 14 may operate an operating system OS on the processing unit 25. The request message 23 may be generated by the operating system OS itself. When the operating system OS receives the selected or requested specification data 16, the operating system OS may store the received specification data 16 in a local data storage 26, for example, in a non-volatile data storage. The operating system OS may run at least one user-space software or application software 27 that each may provide one or more or a part of the functionalities 15. The respective application software 27 may request or read at least a part of the locally stored specification data from local data storage 26. The specification software 27 may request or demand the specification data from the operating system OS. The locally stored specification data may be provided to the respective application software 27 on the basis of a shared-memory logic which saves the necessity of copying the data.

The control unit 18 may comprise a processing unit 30 that may be designed in the way like processing unit 25, i.e. it may comprise at least one microprocessor and/or at least one microcontroller that may be based on a SOC. The processing unit 30 may provide a base service 31, that can be designed as a function that may be called or triggered by the request message 23. The base service 31 may select the specification data 16 stored in the common data storage 19 or it may select a subset based on the request message 23. It may then send the requested specification data 16 to the requesting control unit 14.

Overall, in vehicle 10 a method is provided that enables the distribution of static data, i.e. vehicle specific data that will not change within a single driving phase at a central or common storage position in the common data storage of the vehicle. A base service may be used by other control units and/or functionalities to request or obtain or retrieve the specification data from the common data storage. The static specification data may describe, for example, coding values and/or numbers and/or characteristic values of the vehicle body or vehicle geometry and/or vehicle construction. They can be provided in a modular way, that is, a control unit may request all of the available specification data or a subset thereof. When the vehicle is started (for example, the ignition is initialized and/or the electric network is energized), each control unit receives from the basic service those specification data that it needs for adapting or operating its at least one functionality. This is done only once per driving phase for each control unit. The control unit can store the received specification data in an internal local data storage and provide the received specification data from there to at least one application software that provides a respective functionality in the vehicle. After this initialization phase of receiving the specification data from the common data storage, the communication between the base service and the control units can be interrupted for the remainder of the driving phase, for example, after at most 5 minutes or at most 10 minutes after the start-up of the vehicle. This reduces the network load in the vehicle. As a fallback solution, a control unit may store the received specification data in its local data storage even while the communication unit is switched off between two driving phases. While during the next start-up, it is waiting for the common data storage to deliver the specification data, the already received (probably old) specification data may be used to already start-up functionalities while the answer from the common data storage is still not received.

Thus, the single control unit 14 does not need to be configured individually for a specific vehicle type before the control unit is built into such a vehicle. Static specification data or static parameter, i.e. vehicle parameters, do not need to be stored locally from the very beginning, but instead they are received from the common data storage of the vehicle that the control unit is built into. During a lifetime of the vehicle, updates are available or possible over the air, i.e. via wireless or cable connection such that new or updated specification data can be provided in the common data storage an can be distributed to the control unit from there. For the update, only one single common data storage needs to be updated or written.

After vehicle start-up or during vehicle start-up, each control unit requests the necessary specification data from the base service. After the answer of the base service is received, the control unit stores the received specification data in its internal data storage and thus forwards them to the application software 27. For example, the application software 27 may read the received specification data from the local data storage. Once, the specification data have been received from the common data storage, the control unit may stop or interrupt communication with the common data storage or the base service for the rest of the driving phase. This is possible especially when the specification data cannot change during the driving phase or driving cycle.

Overall, the example shows how a method for distributing static data in a motor vehicle can be provided.

## Claims

1. Method for setting specification data (16) of vehicle specifications in several control units (14) of a vehicle (10), wherein the control units (14) provide at least one vehicle functionality (15) and each of the control units (14) configures its respective part of the least one vehicle functionality (15) on the basis of the vehicle specifications and wherein in the vehicle (10) a common data storage (19) is provided where the specification data (16) describing the currently valid vehicle specifications are stored and the control units (14) are repeatedly operated in an initialization phase (22), wherein in the initialization phase (22) the respective control unit (14) receives a copy of at least a subset of the specification data (16) out of the common data storage (19) and adapts its respective part of the one vehicle functionality (15) according to the received specification data (16), which means that there is only one valid set of specification data (16) provided in the common data storage (19) and that for initializing each of the control units (14), either for setting up or configuring their at least one vehicle functionality (15), they are provided with the specification data (16) from that common data storage (19),
wherein the common data storage (19) is coupled to a communication interface (24) for updating the specification data (16) in the common data storage (19), wherein the communication interface (24) is coupled to a wireless communication unit of the vehicle (10) and/or to a network connector that is designed to receive updated specification data (16) from outside the vehicle (10),
such that after providing new, updated specification data (16) in the common data storage (19), these updated specification data (16) are distributed among the control units (14) in the next initialization phase (22), thus, only the data in the common data storage (19) need to be updated from outside the vehicle (10) and then the vehicle (10) will distribute the updated specification data (16) starting from the common data storage (19).

2. Method according to claim 1, wherein the control units (14) are connected to a communication network (17) and the common data storage (19) is provided in a processing unit (30) that is also connected to the communication network (17) and for transferring the specification data (16) from the common data storage (19) to the control units (14) a base service (31) is provided by the processing unit (30).

3. Method according to claim 2, wherein the base service (31) receives request messages (23) from the control units (14) and selects at least a subset of the specification data (16) according the respective request message (23) and sends the selected specification data (16) to the control unit (14) that sent the respective request message (23) or wherein the base service (31) broadcasts the specification data (16) in the communication network (17) in at least one broadcast message while at least some of the control units (14) are in the initialization phase (22).

4. Method according to any of the preceding claims, wherein the initialization phase (22) is triggered on and/or by a start-up of the vehicle (10) and the base service (31) is provided at or after the start-up until a pre-defined interruption criterion is fulfilled and after the interruption criterion is fulfilled the transfer specification data (16) is interrupted for the remainder of a current driving phase.

5. Method according to any of the preceding claims, wherein when the vehicle (10) is started, a timer is started and at the end of the timer, the initialization phase (22) is triggered.

6. Method according to any of the preceding claims, wherein at least one of the control units (14) comprises an operating system, OS, and the part of the at least one respective functionality (15) of that control unit (14) is implemented as at least one application software (27), App, that is run by the operating system and wherein at least a subset of the specification data (16) is retrieved from the common data storage (19) by the operating system and the retrieved specification data (16) are kept in a local data storage (19) of the control unit (14) and the operating system provides at least a part of the locally stored specification data (16) to the at least one application software (27).

7. Method according to claim 6, wherein the operating system receives requirement data from the at least one application and retrieves only a part of the specification data (16) from the common data storage (19) for at least one application, where the retrieved part is determined on the basis of the requirement data.

8. Method according to any of the preceding claims, wherein at least one of the control units (14) keeps the received specification data (16) in a local data storage (19) while the control unit (14) is switched off and, while in the next initialization phase (22) the control unit (14) is waiting for the specification data (16) from the common data storage (19) and/or if the common data storage (19) is un-reachable for the control unit (14), the control unit (14) provides the locally stored specification data (16) from the local data storage (19) to the vehicle (10) functionality (15).

9. Method according to any of the preceding claims, wherein the specification data (16) describe static specifications that do not changed during a driving phase of the vehicle (10).

10. Method according to any of the preceding claims, wherein the vehicle specifications describe at least one of the following: a geometry of the vehicle (10) that is to be considered by the respective vehicle functionality (15) of at least one control unit (14); equipment (13) that is available in the vehicle (10) for a use by the respective vehicle functionality (15) of at least one control unit (14); a mounting position of a specific equipment (13); available callable functions of a specific equipment (13); a trim level identifier; coding values of specific available functions.

11. Method according to any of the preceding claims, wherein at least one vehicle functionality (15) provides: a driver assistance system, a parking assistance system; and/or
wherein at least one vehicle functionality (15) comprises that the control unit (14) determines on the basis of the specification data (16), if a camera is available and where the respective available camera is positioned, and, if an activation of a reverse gear is detected, a reverse driving assistance is provided for a driver of the vehicle (10) by the control unit (14), wherein the reverse driving assistance provides camera image data to the driver, if a camera is available that provides a pre-defined rear view.

12. Method according to any of the preceding claims, wherein at least one of the control units (14) is designed for a use in several different vehicle (10) types and the respective control unit (14) adapts to the vehicle (10) on the basis of the specification data (16) after the control unit (14) has been built into the vehicle (10).

13. Vehicle (10) comprising control units (14), wherein the control units (14) are designed to provide a respective vehicle (10) functionality (15) and each of the control units (14) is designed to configure its respective vehicle (10) functionality (15) on the basis of the vehicle (10) specifications, wherein in the vehicle (10) a common data storage (19) is provided where specification data (16) describing the currently valid vehicle (10) specifications are stored and the control units (14) are designed to repeatedly operate in an initialization phase (22) where the control units (14) receive a copy of the specification data (16) out of the common data storage (19) and adapt their respective vehicle (10) functionality (15) according to the received specification data (16), which means that there is only one valid set of specification data (16) provided in the common data storage (19) and for initializing each of the control units (14), either for setting up or configuring their at least one vehicle functionality (15), they are provided with the specification data (16) from that common data storage (19),
wherein the common data storage (19) is coupled to a communication interface (24) for updating the specification data (16) in the common data storage (19), wherein the communication interface (24) is coupled to a wireless communication unit of the vehicle (10) and/or to a network connector that is designed to receive updated specification data (16) from outside the vehicle (10),
such that after providing new, updated specification data (16) in the common data storage (19), these updated specification data (16) are distributed among the control units (14) in the next initialization phase (22), thus, only the data in the common data storage (19) need to be updated from outside the vehicle (10) and then the vehicle (10) will distribute the updated specification data (16) starting from the common data storage (19).

## Patentansprüche

1. Verfahren zum Festlegen von Spezifikationsdaten (16) von Fahrzeugspezifikationen in mehreren Steuereinheiten (14) eines Fahrzeugs (10), wobei die Steuereinheiten (14) mindestens eine Fahrzeugfunktionalität (15) bereitstellen und jede der Steuereinheiten (14) ihren jeweiligen Teil der mindestens einen Fahrzeugfunktionalität (15) auf der Basis der Fahrzeugspezifikationen konfiguriert, und wobei im Fahrzeug (10) ein gemeinsamer Datenspeicher (19) vorgesehen ist, in dem die Spezifikationsdaten (16), die die aktuell gültigen Fahrzeugspezifikationen beschreiben, gespeichert sind, und die Steuereinheiten (14) wiederholt in einer Initialisierungsphase (22) betrieben werden, wobei in der Initialisierungsphase (22) die jeweilige Steuereinheit (14) eine Kopie von zumindest einer Teilmenge der Spezifikationsdaten (16) aus dem gemeinsamen Datenspeicher (19) empfängt und ihren jeweiligen Teil der einen Fahrzeugfunktionalität (15) gemäß den empfangenen Spezifikationsdaten (16) anpasst, was bedeutet, dass nur ein gültiger Satz von Spezifikationsdaten (16) vorhanden ist, der im gemeinsamen Datenspeicher (19) vorgesehen ist, und dass zum Initialisieren von jeder der Steuereinheiten (14) entweder zum Einrichten oder Konfigurieren ihrer mindestens einen Fahrzeugfunktionalität (15) sie mit den Spezifikationsdaten (16) von diesem gemeinsamen Datenspeicher (19) versehen werden, wobei der gemeinsame Datenspeicher (19) mit einer Kommunikationsschnittstelle (24) zum Aktualisieren der Spezifikationsdaten (16) im gemeinsamen Datenspeicher (19) gekoppelt ist, wobei die Kommunikationsschnittstelle (24) mit einer drahtlosen Kommunikationseinheit des Fahrzeugs (10) und/oder mit einem Netzwerkverbindungselement gekoppelt ist, das dazu ausgelegt ist, aktualisierte Spezifikationsdaten (16) von außerhalb des Fahrzeugs (10) zu empfangen,
so dass nach dem Bereitstellen von neuen, aktualisierten Spezifikationsdaten (16) im gemeinsamen Datenspeicher (19) diese aktualisierten Spezifikationsdaten (16) unter den Steuereinheiten (14) in der nächsten Initialisierungsphase (22) verteilt werden, folglich nur die Daten im gemeinsamen Datenspeicher (19) von außerhalb des Fahrzeugs (10) aktualisiert werden müssen, und dann das Fahrzeug (10) die aktualisierten Spezifikationsdaten (16) ausgehend vom gemeinsamen Datenspeicher (19) verteilt.

2. Verfahren nach Anspruch 1, wobei die Steuereinheiten (14) mit einem Kommunikationsnetzwerk (17) verbunden sind und der gemeinsame Datenspeicher (19) in einer Verarbeitungseinheit (30) vorgesehen ist, die auch mit dem Kommunikationsnetzwerk (17) verbunden ist, und zum Übertragen der Spezifikationsdaten (16) vom gemeinsamen Datenspeicher (19) zu den Steuereinheiten (14) ein Basisdienst (31) durch die Verarbeitungseinheit (30) bereitgestellt wird.

3. Verfahren nach Anspruch 2, wobei der Basisdienst (31) Anforderungsnachrichten (23) von den Steuereinheiten (14) empfängt und zumindest eine Teilmenge der Spezifikationsdaten (16) gemäß der jeweiligen Anforderungsnachricht (23) auswählt und die ausgewählten Spezifikationsdaten (16) zur Steuereinheit (14) sendet, die die jeweilige Anforderungsnachricht (23) gesendet hat, oder wobei der Basisdienst (31) die Spezifikationsdaten (16) im Kommunikationsnetzwerk (17) in mindestens einer Aussendungsnachricht aussendet, während zumindest einige der Steuereinheiten (14) sich in der Initialisierungsphase (22) befinden.

4. Verfahren nach einem der vorangehenden Ansprüche, wobei die Initialisierungsphase (22) bei einem und/oder durch ein Anfahren des Fahrzeugs (10) ausgelöst wird, und der Basisdienst (31) bei oder nach dem Anfahren bereitgestellt wird, bis ein vordefiniertes Unterbrechungskriterium erfüllt ist, und nachdem das Unterbrechungskriterium erfüllt ist, die Übertragung der Spezifikationsdaten (16) für den Rest einer aktuellen Fahrphase unterbrochen wird.

5. Verfahren nach einem der vorangehenden Ansprüche, wobei, wenn das Fahrzeug (10) gestartet wird, ein Zeitgeber gestartet wird und am Ende des Zeitgebers die Initialisierungsphase (22) ausgelöst wird.

6. Verfahren nach einem der vorangehenden Ansprüche, wobei mindestens eine der Steuereinheiten (14) ein Betriebssystem, OS, umfasst, und der Teil der mindestens einen jeweiligen Funktionalität (15) dieser Steuereinheit (14) als mindestens eine Anwendungs-Software (27), App, implementiert wird, die durch das Betriebssystem betrieben wird, und wobei zumindest eine Teilmenge der Spezifikationsdaten (16) vom gemeinsamen Datenspeicher (19) durch das Betriebssystem abgerufen wird und die abgerufenen Spezifikationsdaten (16) in einem lokalen Datenspeicher (19) der Steuereinheit (14) gehalten werden und das Betriebssystem zumindest einen Teil der lokal gespeicherten Spezifikationsdaten (16) zu der mindestens einen Anwendungs-Software (27) liefert.

7. Verfahren nach Anspruch 6, wobei das Betriebssystem Anforderungsdaten von der mindestens einen Anwendung empfängt und nur einen Teil der Spezifikationsdaten (16) vom gemeinsamen Datenspeicher (19) für mindestens eine Anwendung abruft, wobei der abgerufene Teil auf der Basis der Anforderungsdaten bestimmt wird.

8. Verfahren nach einem der vorangehenden Ansprüche, wobei mindestens eine der Steuereinheiten (14) die abgerufenen Spezifikationsdaten (16) in einem lokalen Datenspeicher (19) hält, während die Steuereinheit (14) ausgeschaltet ist, und während in der nächsten Initialisierungsphase (22) die Steuereinheit (14) auf die Spezifikationsdaten (16) vom gemeinsamen Datenspeicher (19) wartet, und/oder wenn der gemeinsame Datenspeicher (19) für die Steuereinheit (14) unerreichbar ist, die Steuereinheit (14) die lokal gespeicherten Spezifikationsdaten (16) vom lokalen Datenspeicher (19) für die Funktionalität (15) des Fahrzeugs (10) bereitstellt.

9. Verfahren nach einem der vorangehenden Ansprüche, wobei die Spezifikationsdaten (16) statische Spezifikationen beschreiben, die während einer Fahrphase des Fahrzeugs (10) nicht geändert werden.

10. Verfahren nach einem der vorangehenden Ansprüche, wobei die Fahrzeugspezifikationen mindestens eine der Folgenden beschreiben: eine Geometrie des Fahrzeugs (10), die durch die jeweilige Fahrzeugfunktionalität (15) von mindestens einer Steuereinheit (14) berücksichtigt werden soll; eine Ausrüstung (13), die im Fahrzeug (10) für eine Verwendung durch die jeweilige Fahrzeugfunktionalität (15) von mindestens einer Steuereinheit (14) verfügbar ist; eine Montageposition einer speziellen Ausrüstung (13); verfügbare aufrufbare Funktionen einer speziellen Ausrüstung (13); eine Ausstattungsvariantenkennung; Codierwerte von speziellen verfügbaren Funktionen.

11. Verfahren nach einem der vorangehenden Ansprüche, wobei mindestens eine Fahrzeugfunktionalität (15) bereitstellt: ein Fahrerassistenzsystem, ein Parkassistenzsystem; und/oder
wobei mindestens eine Fahrzeugfunktionalität (15) umfasst, dass die Steuereinheit (14) auf der Basis der Spezifikationsdaten (16) bestimmt, ob eine Kamera verfügbar ist und wo die jeweilige verfügbare Kamera positioniert ist, und wenn eine Aktivierung eines Rückwärtsgangs detektiert wird, eine Rückfahrassistenz für einen Fahrer des Fahrzeugs (10) durch die Steuereinheit (14) bereitgestellt wird, wobei die Rückfahrassistenz Kamerabilddaten für den Fahrer bereitstellt, wenn eine Kamera verfügbar ist, die eine vordefinierte Rückansicht bereitstellt.

12. Verfahren nach einem der vorangehenden Ansprüche, wobei mindestens eine der Steuereinheiten (14) für eine Verwendung in mehreren verschiedenen Typen eines Fahrzeugs (10) ausgelegt ist und die jeweilige Steuereinheit (14) sich an das Fahrzeug (10) auf der Basis der Spezifikationsdaten (16) anpasst, nachdem die Steuereinheit (14) in das Fahrzeug (10) eingebaut wurde.

13. Fahrzeug (10) mit Steuereinheiten (14), wobei die Steuereinheiten (14) dazu ausgelegt sind, eine jeweilige Funktionalität (15) des Fahrzeugs (10) bereitzustellen, und jede der Steuereinheiten (14) dazu ausgelegt ist, ihre jeweilige Funktionalität (15) des Fahrzeugs (10) auf der Basis der Spezifikationen des Fahrzeugs (10) zu konfigurieren, wobei im Fahrzeug (10) ein gemeinsamer Datenspeicher (19) vorgesehen ist, in dem Spezifikationsdaten (16), die die aktuell gültigen Spezifikationen des Fahrzeugs (10) beschreiben, gespeichert sind, und die Steuereinheiten (14) dazu ausgelegt sind, wiederholt in einer Initialisierungsphase (22) zu arbeiten, in der die Steuereinheiten (14) eine Kopie der Spezifikationsdaten (16) aus dem gemeinsamen Datenspeicher (19) empfangen und ihre jeweilige Funktionalität (15) des Fahrzeugs (10) gemäß den empfangenen Spezifikationsdaten (16) anpassen, was bedeutet, dass nur ein gültiger Satz von Spezifikationsdaten (16) vorhanden ist, der im gemeinsamen Datenspeicher (19) vorgesehen ist, und zum Initialisieren von jeder der Steuereinheiten (14) entweder zum Einrichten oder Konfigurieren ihrer mindestens einen Fahrzeugfunktionalität (15) sie mit den Spezifikationsdaten (16) von diesem gemeinsamen Datenspeicher (19) versehen werden, wobei der gemeinsame Datenspeicher (19) mit einer Kommunikationsschnittstelle (24) zum Aktualisieren der Spezifikationsdaten (16) im gemeinsamen Datenspeicher (19) gekoppelt ist, wobei die Kommunikationsschnittstelle (24) mit einer drahtlosen Kommunikationseinheit des Fahrzeugs (10) und/oder mit einem Netzwerkverbindungselement gekoppelt ist, das dazu ausgelegt ist, aktualisierte Spezifikationsdaten (16) von außerhalb des Fahrzeugs (10) zu empfangen,
so dass nach dem Bereitstellen von neuen, aktualisierten Spezifikationsdaten (16) im gemeinsamen Datenspeicher (19) diese aktualisierten Spezifikationsdaten (16) unter den Steuereinheiten (14) in der nächsten Initialisierungsphase (22) verteilt werden, folglich nur die Daten im gemeinsamen Datenspeicher (19) von außerhalb des Fahrzeugs (10) aktualisiert werden müssen, und dann das Fahrzeug (10) die aktualisierten Spezifikationsdaten (16) ausgehend vom gemeinsamen Datenspeicher (19) verteilt.

## Revendications

1. Procédé pour paramétrer des données de spécifications (16) de spécifications de véhicule dans plusieurs unités de commande (14) d'un véhicule (10), les unités de commande (14) fournissant au moins une fonctionnalité de véhicule (15) et chacune des unités de commande (14) configurant sa partie respective de la au moins une fonctionnalité de véhicule (15) sur la base des spécifications de véhicule et dans le véhicule (10) étant fourni un dispositif de stockage de données commun (19) où les données de spécifications (16) décrivant les spécifications de véhicule actuellement valides sont stockées et les unités de commande (14) fonctionnant de manière répétée pendant une phase d'initialisation (22), dans lequel, pendant la phase d'initialisation (22), l'unité de commande (14) respective reçoit une copie d'au moins un sous-ensemble des données de spécifications (16) à l'extérieur du dispositif de stockage de données commun (19) et adapte sa partie respective de la fonctionnalité de véhicule (15) en fonction des données de spécifications (16) reçues, ce qui implique qu'il n'y a qu'un seul ensemble valide de données de spécifications (16) fournies dans le dispositif de stockage de données commun (19) et que pour initialiser chacune des unités de commande (14), soit pour paramétrer soit pour configurer leur au moins une fonctionnalité de véhicule (15), les données de spécifications (16) provenant de ce dispositif de stockage de données commun (19) leur sont fournies,
le dispositif de stockage de données commun (19) étant couplé à une interface de communication (24) pour mettre à jour les données de spécifications (16) dans le dispositif de stockage de données commun (19), l'interface de communication (24) étant couplée à une unité de communication sans fil du véhicule (10) et/ou à un connecteur de réseau qui est conçu pour recevoir des données de spécifications (16) mises à jour depuis l'extérieur du véhicule (10),
de telle sorte qu'après la fourniture de nouvelles données de spécifications (16) mises à jour dans le dispositif de stockage de données commun (19), ces données de spécifications (16) mises à jour sont réparties entre les unités de commande (14) pendant la phase d'initialisation (22) suivante, seules les données dans le dispositif de stockage de données commun (19) ayant ainsi besoin d'être mises à jour depuis l'extérieur du véhicule (10), et le véhicule (10) distribuant ensuite les données de spécifications (16) mises à jour depuis le dispositif de stockage de données commun (19).

2. Procédé selon la revendication 1, dans lequel les unités de commande (14) sont connectées à un réseau de communication (17) et le dispositif de stockage de données commun (19) est fourni dans une unité de traitement (30) qui est également connectée au réseau de communication (17) et pour transférer les données de spécifications (16) du dispositif de stockage de données commun (19) aux unités de commande (14), un service de base (31) est fourni par l'unité de traitement (30).

3. Procédé selon la revendication 2, dans lequel le service de base (31) reçoit des messages de demande (23) provenant des unités de commande (14) et sélectionne au moins un sous-ensemble des données de spécifications (16) en fonction du message de demande (23) respectif et envoie les données de spécifications (16) sélectionnées à l'unité de commande (14) qui a envoyé le message de demande (23) respectif, ou dans lequel le service de base (31) diffuse les données de spécifications (16) dans le réseau de communication (17) dans au moins un message de diffusion pendant qu'au moins une partie des unités de commande (14) sont dans la phase d'initialisation (22).

4. Procédé selon l'une quelconque des revendications précédentes, dans lequel la phase d'initialisation (22) est déclenchée lors et/ou par un démarrage du véhicule (10) et le service de base (31) est fourni au démarrage ou après le démarrage jusqu'à ce qu'un critère d'interruption prédéfini soit satisfait et, après que le critère d'interruption soit satisfait, les données de spécifications de transfert (16) sont interrompues pendant le reste d'une phase de conduite en cours.

5. Procédé selon l'une quelconque des revendications précédentes, dans lequel lorsque le véhicule (10) a démarré, une temporisation est lancée et à la fin de la temporisation, la phase d'initialisation (22) est déclenchée.

6. Procédé selon l'une quelconque des revendications précédentes, dans lequel au moins une des unités de commande (14) comporte un système d'exploitation, OS, et la partie de la au moins une fonctionnalité (15) respective de cette unité de commande (14) est mise en œuvre sous la forme d'au moins un logiciel d'application (27), App, qui est exécuté par le système d'exploitation, et dans lequel au moins un sous-ensemble des données de spécifications (16) est récupéré du dispositif de stockage de données commun (19) par le système d'exploitation et les données de spécifications (16) récupérées sont conservées dans un dispositif de stockage de données local (19) de l'unité de commande (14) et le système d'exploitation fournit au moins une partie des données de spécifications (16) stockées localement au au moins un logiciel d'application (27).

7. Procédé selon la revendication 6, dans lequel le système d'exploitation reçoit des données d'exigence provenant de la au moins une application et ne récupère qu'une partie des données de spécifications (16) provenant du dispositif de stockage de données commun (19) pour au moins une application, la partie récupérée étant déterminée sur la base des données d'exigence.

8. Procédé selon l'une quelconque des revendications précédentes, dans lequel au moins une des unités de commande (14) conserve les données de spécifications (16) reçues dans un dispositif de stockage de données local (19) pendant que l'unité de commande (14) est hors tension et, pendant la phase d'initialisation (22) suivante, l'unité de commande (14) attend les données de spécifications (16) provenant du dispositif de stockage de données commun (19) et/ou si le dispositif de stockage de données commun (19) est inaccessible pour l'unité de commande (14), l'unité de commande (14) fournit les données de spécifications (16) stockées localement provenant du dispositif de stockage de données local (19) à la fonctionnalité (15) du véhicule (10).

9. Procédé selon l'une quelconque des revendications précédentes, dans lequel les données de spécifications (16) décrivent des spécifications statiques qui ne changent pas pendant une phase de conduite du véhicule (10).

10. Procédé selon l'une quelconque des revendications précédentes, dans lequel les spécifications de véhicule décrivent au moins un des éléments suivants : une géométrie du véhicule (10) qui doit être prise en compte par la fonctionnalité de véhicule (15) respective d'au moins une unité de commande (14) ; un équipement (13) qui est disponible dans le véhicule (10) pour une utilisation par la fonctionnalité de véhicule (15) respective d'au moins une unité de commande (14) ; une position de montage d'un équipement (13) spécifique ; des fonctions pouvant être appelées et disponibles d'un équipement (13) spécifique ; un identifiant de niveau d'équipement ; des valeurs de codage de fonctions disponibles spécifiques.

11. Procédé selon l'une quelconque des revendications précédentes, dans lequel au moins une fonctionnalité de véhicule (15) fournit : un système d'aide à la conduite, un système d'aide au stationnement ; et/ou
au moins une fonctionnalité de véhicule (15) comportant que l'unité de commande (14) détermine, sur la base des données de spécifications (16), si une caméra est disponible et l'endroit où la caméra disponible respective est positionnée, et, si une activation d'une marche arrière est détectée, une aide à la marche arrière est fournie pour un conducteur du véhicule (10) par l'unité de commande (14), l'assistance à la marche arrière fournissant des données d'image de caméra au conducteur, si une caméra est disponible qui fournit une vue arrière prédéfinie.

12. Procédé selon l'une quelconque des revendications précédentes, dans lequel au moins une des unités de commande (14) est conçue pour une utilisation dans plusieurs différents types de véhicule (10) et l'unité de commande (14) respective s'adapte au véhicule (10) sur la base des données de spécifications (16) après que l'unité de commande (14) a été intégrée dans le véhicule (10).

13. Véhicule (10) comportant des unités de commande (14), les unités de commande (14) étant conçues pour fournir une fonctionnalité (15) respective du véhicule (10) et chacune des unités de commande (14) étant conçue pour configurer sa fonctionnalité (15) respective du véhicule (10) sur la base des spécifications du véhicule (10), dans lequel dans le véhicule (10) est fourni un dispositif de stockage de données commun (19) où des données de spécifications (16) décrivant les spécifications du véhicule (10) actuellement valides sont stockées et les unités de commande (14) sont conçues pour fonctionner de manière répétée pendant une phase d'initialisation (22) où les unités de commande (14) reçoivent une copie des données de spécifications (16) provenant du dispositif de stockage de données commun (19) et adaptent leur fonctionnalité (15) respective du véhicule (10) en fonction des données de spécifications (16) reçues, ce qui implique qu'il n'y a qu'un seul ensemble valide de données de spécifications (16) fourni dans le dispositif de stockage de données commun (19) et pour initialiser chacune des unités de commande (14), soit pour paramétrer soit pour configurer leur au moins une fonctionnalité de véhicule (15), les données de spécifications (16) provenant de ce dispositif de stockage de données commun (19) leur sont fournies,
le dispositif de stockage de données commun (19) étant couplé à une interface de communication (24) pour mettre à jour les données de spécifications (16) dans le dispositif de stockage de données commun (19), l'interface de communication (24) étant couplée à une unité de communication sans fil du véhicule (10) et/ou à un connecteur de réseau qui est conçu pour recevoir des données de spécifications (16) mises à jour depuis l'extérieur du véhicule (10),
de telle sorte qu'après la fourniture de nouvelles données de spécifications (16) mises à jour dans le dispositif de stockage de données commun (19), ces données de spécifications (16) mises à jour sont réparties entre les unités de commande (14) pendant la phase d'initialisation (22) suivante, seules les données dans le dispositif de stockage de données commun (19) ayant ainsi besoin d'être mises à jour depuis l'extérieur du véhicule (10), et le véhicule (10) distribuant ensuite les données de spécifications (16) mises à jour depuis le dispositif de stockage de données commun (19).
